# EUROPEAN PATENT SPECIFICATION

(11) **EP 2 794 061 B1**
(45) Date of publication and mention of the grant of the patent: **09.11.2016**
(21) Application number: 12815806.0
(22) Date of filing: 06.12.2012
(51) Int. Cl.: B01D 46/00, B01D 46/10, B01D 46/52, F02M 35/024

(54) **A PANEL-LIKE AIR FILTER CARTRIDGE OF PLEATED PAPER WITH VARIABLE DEPTH FOR INTERNAL COMBUSTION ENGINES, EQUIPPED WITH A HIGH-EFFICIENCY INTEGRATED CHANNELLING MEMBER**
PLATTENFÖRMIGE LUFTFILTERPATRONE AUS FALTPAPIER MIT VARIABLER TIEFE FÜR BRENNKRAFTMASCHINEN MIT EINEM LEISTUNGSSTARKEN INTEGRIERTEN KANALISIERUNGSELEMENT
CARTOUCHE FILTRE À AIR DE TYPE PANNEAU CONSTITUÉ D'UN PAPIER PLISSÉ DE PROFONDEUR VARIABLE POUR MOTEURS À COMBUSTION INTERNE, ÉQUIPÉE D'UN ÉLÉMENT CANALAIRE INTÉGRÉ À HAUTE EFFICACITÉ

(30) Priority: 23.12.2011 IT TO20110151
(43) Date of publication of application: 29.10.2014
(60) Divisional application: 16191690.3
(73) Proprietor: OFFICINE METALLURGICHE G. CORNAGLIA S.p.A., 10092 Beinasco (TO) (IT)
(72) Inventor: ROCCA, Giorgio, I-10131 Torino (IT); CORNAGLIA, Umberto, I-10027 Moncalieri (TO) (IT)
(74) Representative: Robba, Pierpaolo
(86) International application number: PCT/IB2012/057017
(87) International publication number: WO 2013/093685

(56) References cited:
- EP-A1- 2 106 836
- EP-A2- 0 534 079
- EP-A2- 2 011 992
- DE-A1-102004 002 293
- US-A- 5 043 000
- US-A- 5 472 463
- US-A1- 2007 270 095
- US-B1- 6 336 946

## Description

The present invention relates to a panel-like air filter cartridge of pleated paper with variable depth for internal combustion engines, which cartridge is equipped with a high-efficiency integrated channelling member.

In order to purify air entering the intake circuit of an internal combustion engine, it is known to use filtering cartridges made of pleated paper, which are located in a suitable housing. The housing has an inlet opening for dirty air and an outlet opening for the purified air, and internally defines a fixed air path, such that the whole transiting air flow flows through the filtering material. To this end, the prior art housings are variously shaped and suitable sealing gaskets are provided between the housing and the cartridge in order to define said fixed air path and to avoid as much as possible leaks. The filter housing is usually located near the engine the purified air is intended for and, in case of engines used in vehicles, it is generally located in the same compartment where the engine is located. Such an arrangement determines the need for filter housings, and consequently filter cartridges, having small sizes as well as shapes compatible with the available spaces in the engine compartment.

Thus, one of the problems to be solved in manufacturing filter cartridges is how to improve the filtering efficiency of the cartridge while possibly reducing its size.

In order to improve air purifying efficiency and to keep the air filter size limited, a number of configurations of filter cartridges made of pleated paper have been developed in the past. Recently, for instance, filter cartridges made of pleated paper and having variable depth have become widespread.

A panel-like filter cartridge, made of pleated paper and having variable depth, is generally obtained by feeding a sheet of paper for air filters to a pleating machine capable of producing a filter pack in which a succession of bends and tips and corresponding connecting walls are defined. The pleat depth may be constant along the pleated paper pack, or it may vary according to different configurations.

An example of such a filter cartridge is disclosed in DE 198 16 431.

EP0534079 and EP2106836 both disclose panel like air filter cartridges.

The variable depth of the pleats in the paper allows fitting to the shape of the housing containing the cartridge by optimally exploiting the internal space thereof, thereby resulting in a reduction of the overall filter size and in the possibility of making housings with different shapes, fitting to the available spaces in the engine compartment of a vehicle.

The modern internal combustion engines are generally equipped with electronic systems for controlling fuel supply, which require an electric single representative of the amount of air sucked by the motor. Such a signal is generated by a flow sensor or flowmeter, also known as "debimeter", which typically is positioned immediately downstream the air filter, near the air outlet from the filter.

The signal generated by the flowmeter is reliable only if the flowmeter is properly positioned relative to the air flow leaving the filter.

A further problem to be solved in manufacturing filter cartridges intended for intake circuits equipped with a flowmeter is thus how to determine the conditions for the good operation of such a device.

In the field of internal combustion engines, in particular intended for land vehicles, there is therefore the need to give a greater efficiency to the air filter cartridges, in order to achieve the advantages mentioned above of performance increase, size reduction, good operation of the flowmeter, and so on.

The above advantages are achieved by making the filter cartridge with the configuration as claimed in the appended claims.

A preferred embodiment of the invention will now be described with particular reference to the accompanying drawings, in which:

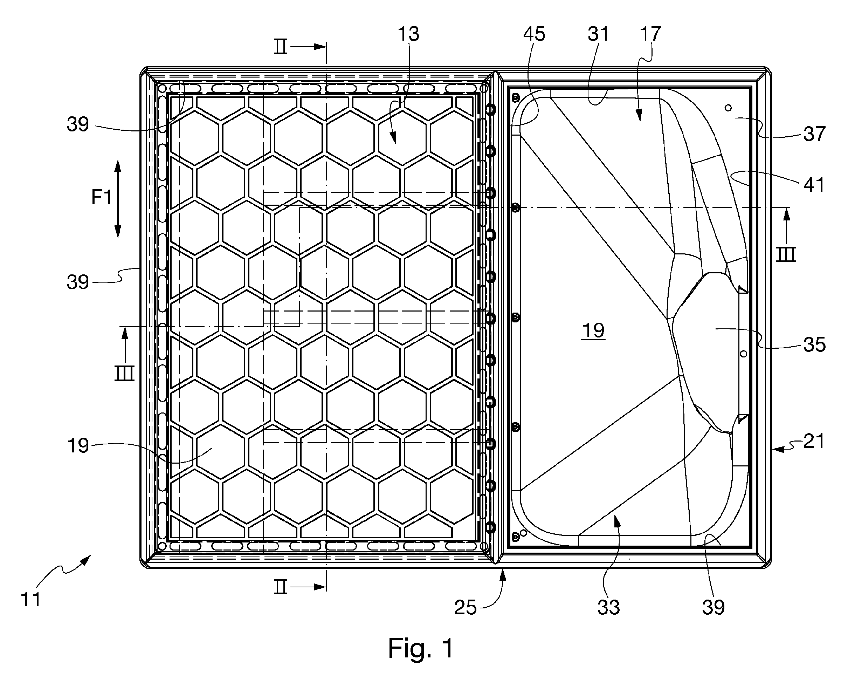

- Fig. 1 is a plan view of the cartridge according to the invention;

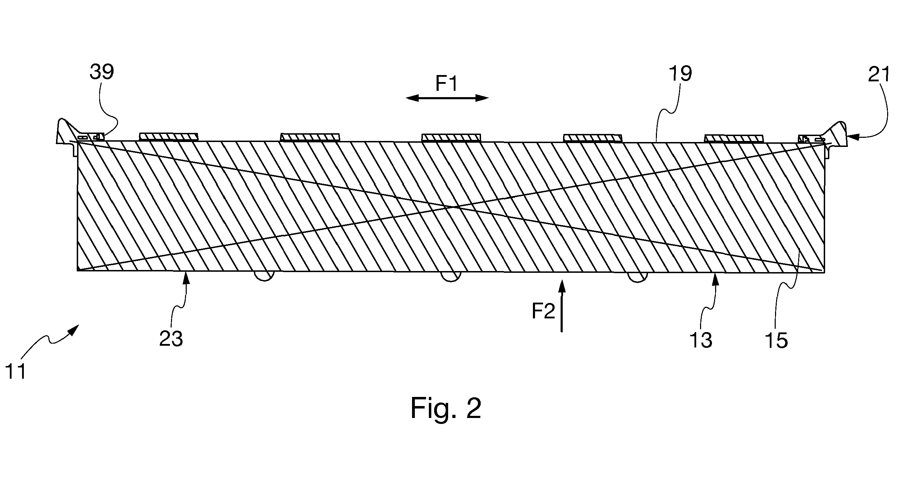

- Fig. 2 is a cross-sectional view taken along line II - II of Fig. 1;

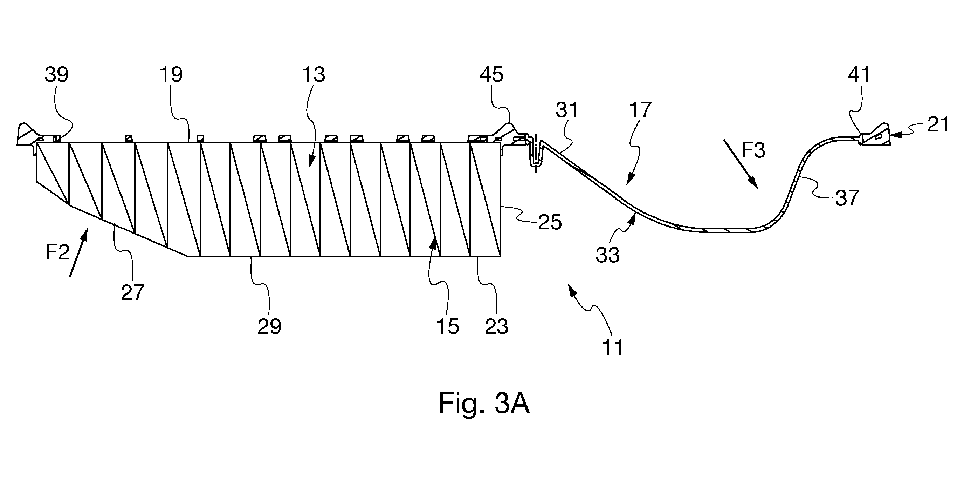

- Fig. 3A is a cross-sectional view taken along line III - III of Fig. 1, in which the cartridge is shown with a first profile of depth variation;

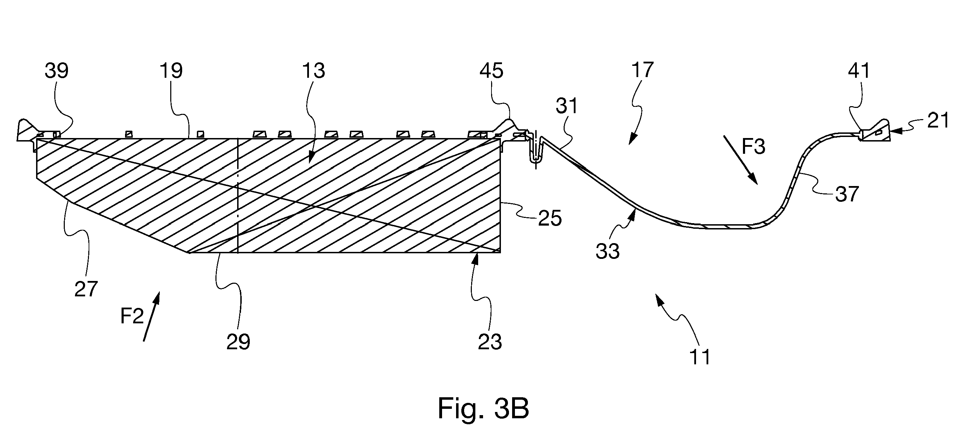

- Fig. 3B is a cross-sectional view taken along line III - III of Fig. 1, in which the cartridge is shown with a second profile of depth variation;

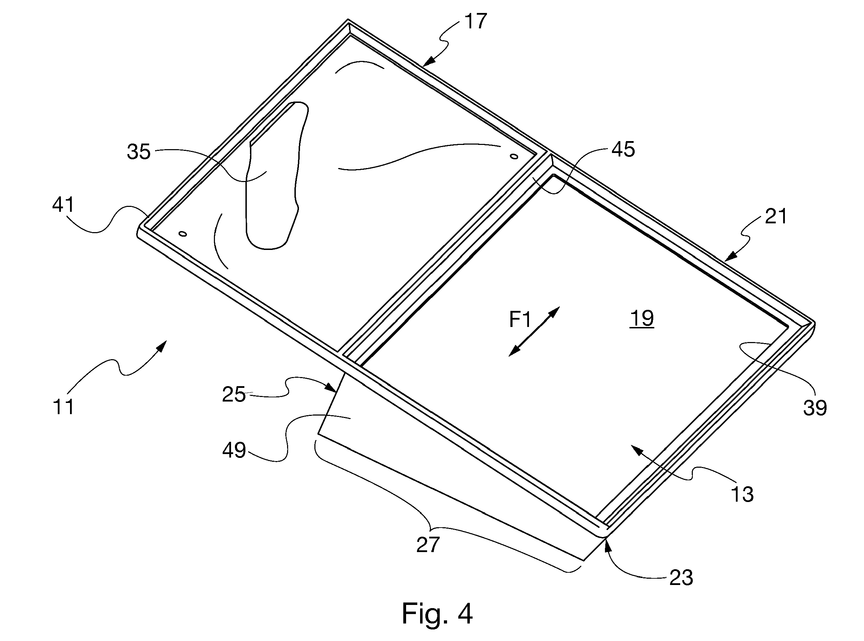

- Fig. 4 is a perspective top view of the cartridge according to the invention, in which the cartridge is shown with a third profile of depth variation;
- Fig. 5 is a perspective top view of the cartridge located in the housing of a filter box, from which the cover has been raised.

Referring to the accompanying drawings, the filter cartridge according to the invention is generally denoted by reference numeral 11.

Cartridge 11 includes a filter section 13 made of pleated paper, of which pleats 15 are parallel and arranged in the direction shown by arrow F1, and an air channelling section 17 or channelling member.

When cartridge 11 is located within the housing of a filter box, channelling section 17 is located downstream filter section 13 in the air flow direction. More precisely, in the above arrangement, air flow through filter section 13 takes place substantially upwards, in the direction shown by arrow F2, and purified air flow having flown through the filter portion flows through channelling section 17 downwards, in the direction shown by arrow F3.

As it can be appreciated from the accompanying drawings, cartridge 11 substantially has a panel-like structure, and the panel in the illustrated example is substantially shaped as a parallelepiped, with a substantially flat top face 19 surrounded by a peripheral gasket 21 and a bottom face 23 defined by the shaped profiles of filter section 13 and channelling section 17.

Both filter section 13 and air channelling section 17 have substantially a quadrilateral shape, preferably a rectangular or square shape, and channelling section 17 is arranged adjacent to filter section 13 along one side 25 of filter section 13 parallel to direction F1 of pleats 15 in the paper.

Moreover, filter section 13 has at least one portion 27 where the depth of pleats 15 progressively increases in the direction towards channelling section 17. The remaining portion 29 of filter section 13, when provided, has on the contrary constant-depth pleats 15.

Consequently, the cross-sectional shape of cartridge 11 in a plane perpendicular to direction F1 of pleats 15 is substantially trapezoidal, as far as filter section 13 is concerned.

Channelling section 17 has the shape of a hopper 33 provided with an air inlet opening 31 and an air outlet mouth 35.

Opening 31 substantially extends in a plane common to filter section 13 and substantially over the whole surface of said plane belonging to channelling section 17.

Mouth 35 is located at the bottom of hopper 33, along a plane substantially parallel to the walls of paper pleats 15 in section 13.

Preferably moreover mouth 35 is located substantially centrally of bottom wall 37 of hopper 33.

According to the invention, mouth 35 provided at the bottom of channelling section 17 is formed in bottom wall 37 of such a channelling section and has no edges turned to the outside. Such a mouth 35 therefore has the appearance of a window cut in the wall of hopper 33.

Advantageously, the above arrangement of mouth 35 is optimum for the operation of the flowmeter connected immediately downstream said mouth 35 in the duct of the intake circuit of the engine the air purified by cartridge 11 is intended for.

Perimeter 39 of filter section 13 and perimeter 41 of channelling section 17, in their common plane, are surrounded by air-tight sealing gasket 21, which may advantageously be made of polyurethane and moulded together with section 13 and section 17. Gasket 21 is arranged to cooperate with the wall of housing 43 in which cartridge 11 is located. Moreover, section 45 of gasket 21 extending along side 25 is preferably common to filter section 13 and channelling section 17.

Channelling section 17 may be made of plastic material, by moulding.

The lateral sides of the filter section perpendicular to direction F1 of pleats 15 are made impermeable to air for instance by means of corresponding panels 49.

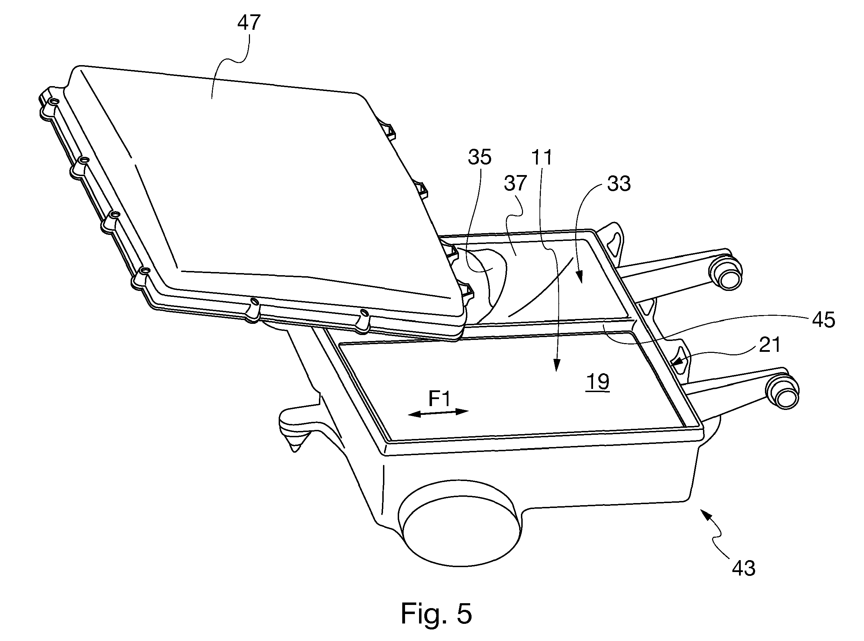

Referring in particular to Fig. 5, when in use, cartridge 11 is housed in housing 43 having a cover 47. Perimeter 51 of housing 43 and perimeter 53 of cover 47 cooperate with gasket 21 of cartridge 11 in order to provide the hermetic sealing of housing 43. A transverse partition inside housing 43, located so as to cooperate with transverse section 45 of gasket 21, separates the chambers of housing 43 intended to house filter section 13 and channelling section 17, respectively.

Several changes and modifications are possible for the cartridge as described and shown.

## Claims

1. A panel-like air filter cartridge (11) with variable depth for location within a housing of a filter box of internal combustion engines, comprising a filter section (13), made of pleated paper and having a quadrilateral shape, and a second section (17), also with a quadrilateral shape, arranged adjacent to the filter section (13) along one side (25) of the filter section (13) parallel to the direction of the pleats (15) in the paper, wherein, in at least one portion (27) of the filter section (13), the depth of the pleats (15) progressively increases in a direction towards the second section (17) thereby originating said variable depth of the filter cartridge and wherein, a plane common to both sections is defined in which an air-tight sealing gasket (21) of polyurethane is provided surrounding the perimeter (39) of the filter section (13) and the perimeter (41) of the second section (17), a section (45) of said gasket (21) extending along the side (25) of the filter section (13) along which the second section (17) is arranged being common to the filter section (13) and to the second section (17), **characterized in that** said second section is a high efficiency integrated air channelling member shaped as a hopper provided with an air inlet opening (31) extending in said plane common to the filter section (13) and to the second section and an air outlet mouth (35) provided at the bottom of the channelling section (17) in a bottom wall (37) of the channelling section (17) and having no edges turned to the outside, along a plane parallel to the walls of the pleats (15) in the paper.

2. The cartridge as claimed in claim 1, wherein the cross-sectional shape of the cartridge (11) in a plane perpendicular to the pleats (15) is substantially trapezoidal, as far as the filter section (13) is concerned.

3. The cartridge as claimed in any preceding claim, wherein the channelling section (17) is made of plastic material.

4. The cartridge as claimed in any preceding claim, wherein the face (19) of the filter section (13) lying in the plane common to the air inlet opening (31) of the hopper (33) is flat.

5. The cartridge as claimed in any preceding claim, wherein the face of the filter section (13) opposite to the face (19) lying in the plane common to the air inlet opening (31) in the hopper (33) has a variable inclination

6. The cartridge as claimed in any preceding claim, wherein the sides of the filter section (13) are impermeable to air.

7. The cartridge as claimed in any preceding claim, wherein the air outlet mouth (35) is located substantially centrally of the bottom wall (37) of the hopper (33).

## Patentansprüche

1. Plattenförmige Luftfilterpatrone (11) mit variabler Tiefe zum Anordnen in einem Gehäuse eines Filterkastens von Brennkraftmaschinen, mit einem Filterabschnitt (13), der aus plissiertem Papier hergestellt ist und eine viereckige Form hat, und einem zweiten Abschnitt (17), der ebenfalls eine viereckige Form hat und angrenzend an den Filterabschnitt (13) entlang einer Seite (25) des Filterabschnitts (13) parallel zu der Richtung der Falten (15) in dem Papier angeordnet ist, wobei in wenigstens einem Teil (27) des Filterabschnitts (13) die Tiefe der Falten (15) zunehmend in einer Richtung hin zu dem zweiten Abschnitt (17) zunimmt, wodurch die variable Tiefe der Filterpatrone beruht und wobei eine Ebene, die beiden Abschnitten gemeinsam ist, definiert ist, in der eine luftdichte Dichtung (21) aus Polyurethan angeordnet ist, die den Umfang (39) des Filterabschnitts (13) und den Umfang (41) des zweiten Abschnitts (17) umgibt, wobei ein Abschnitt (45) der Dichtung (21), der sich entlang einer Seite (25) des Filterabschnitts (13) erstreckt, entlang welcher der zweite Abschnitt (17) angeordnet ist, sowohl zu dem Filterabschnitt (13) als auch zu dem zweiten Abschnitt (17) gehört, **dadurch gekennzeichnet, dass** der zweite Abschnitt ein leistungsstarkes integriertes Luft-Kanalisierungselement ist, das als ein Trichter geformt ist, der eine Lufteinlassöffnung (31), die sich in der Ebene erstreckt, die sowohl zu dem Filterabschnitt (13) als auch zu dem zweiten Abschnitt gehört, und eine Luftauslassöffnung (35) aufweist, die an dem Boden des Kanalisierungsabschnitts (17) in einer Bodenwand (37) des Kanalisierungsabschnitts (17) vorgesehen ist und keine nach außen gerichteten Kanten entlang einer Ebene aufweist, die parallel zu den Wänden der Falten (15) in dem Papier verläuft.

2. Patrone nach Anspruch 1, wobei die Querschnittsform der Patrone (11) in einer Ebene senkrecht zu den Falten (15) im Wesentlichen trapezförmig ist, soweit der Filterabschnitt (13) betroffen ist.

3. Patrone nach einem der vorstehenden Ansprüche, wobei der Kanalisierungsabschnitt (17) aus Kunststoff ist.

4. Patrone nach einem der vorstehenden Ansprüche, wobei die Seite (19) des Filterabschnitts (13), die in der Ebene der Lufteinlassöffnung (31) des Trichters (33) liegt, flach ist.

5. Patrone nach einem der vorstehenden Ansprüche, wobei die Seite (19) des Filterabschnitts (13), die der Seite (19), die in der Ebene der Lufteinlassöffnung (31) des Trichters (33) liegt, gegenüberliegt, eine variable Neigung hat.

6. Patrone nach einem der vorstehenden Ansprüche, wobei die Seiten des Filterabschnitts (13) luftundurchlässig sind.

7. Patrone nach einem der vorstehenden Ansprüche, wobei die Luftauslassöffnung (35) im Wesentlichen zentral zu der Bodenwand (37) des Trichters (33) angeordnet ist.

## Revendications

1. Cartouche de filtre à air de type panneau (11) de profondeur variable pour une localisation à l'intérieur d'un logement d'un boîtier de filtre de moteurs à combustion interne, comprenant une section de filtre (13), constituée de papier plissé et ayant une forme de quadrilatère, et une seconde section (17), également en forme de quadrilatère, agencée adjacente à la section de filtre (13) le long d'un côté (25) de la section de filtre (13) parallèle à la direction des plis (15) dans le papier, dans laquelle, dans au moins une portion (27) de la section de filtre (13), la profondeur des plis (15) augmente progressivement dans une direction vers la seconde section (17), résultant ainsi en ladite profondeur variable de la cartouche de filtre et dans laquelle un plan commun aux deux sections est défini, où est prévu un joint d'étanchéité étanche à l'air (21) en polyuréthane entourant le périmètre (39) de la section de filtre (13) et le périmètre (41) de la seconde section (17), une section (45) dudit joint (21) s'étendant le long du côté (25) de la section de filtre (13) le long duquel la seconde section (17) est agencée étant commune à la section de filtre (13) et à la seconde section (17), **caractérisée en ce que** ladite seconde section est un élément de conduit d'air intégré à haut rendement formé comme une trémie pourvue d'une ouverture d'entrée d'air (31) s'étendant dans ledit plan commun à la section de filtre (13) et à la seconde section et d'un bec de sortie d'air (35) ménagé au fond de la section du conduit (17) dans une paroi de fond (37) de la section du conduit et n'ayant pas de bords tournés vers l'extérieur, le long d'un plan parallèle aux parois des plis (15) dans le papier.

2. Cartouche selon la revendication 1, dans laquelle la forme en coupe de la cartouche (11) dans un plan perpendiculaire aux plis (15) est sensiblement trapézoïdale, en ce qui concerne la section de filtre (13) .

3. Cartouche selon l'une quelconque des revendications précédentes, dans laquelle la section du conduit (17) est constituée de matière plastique.

4. Cartouche selon l'une quelconque des revendications précédentes, dans laquelle la face (19) de la section de filtre (13) se situant dans le plan commun à l'ouverture d'entrée d'air (31) de la trémie (33) est plate.

5. Cartouche selon l'une quelconque des revendications précédentes, dans laquelle la face de la section de filtre (13) opposée à la face (19) se situant dans le plan commun à l'ouverture d'entrée d'air (31) dans la trémie (33) a une inclinaison variable.

6. Cartouche selon l'une quelconque des revendications précédentes, dans laquelle les côtés de la section de filtre (13) sont imperméables à l'air.

7. Cartouche selon l'une quelconque des revendications précédentes, dans laquelle le bec de sortie d'air (35) est situé sensiblement au centre de la paroi de fond (37) de la trémie (33) .
